# EUROPEAN PATENT SPECIFICATION

(11) **EP 3 048 524 B1**
(45) Date of publication and mention of the grant of the patent: **11.09.2019**
(21) Application number: 16151840.2
(22) Date of filing: 19.01.2016
(51) Int. Cl.: G06F 3/14, G06Q 10/10, G09G 5/12, H04L 12/18, H04L 29/06, H04M 3/56, H04N 7/15

(54) **DOCUMENT DISPLAY SUPPORT DEVICE, TERMINAL, DOCUMENT DISPLAY METHOD, AND COMPUTER-READABLE STORAGE MEDIUM FOR COMPUTER PROGRAM**
DOKUMENTANZEIGETRÄGERVORRICHTUNG, ENDGERÄT, DOKUMENTANZEIGEVERFAHREN UND COMPUTERLESBARES SPEICHERMEDIUM FÜR EIN COMPUTERPROGRAMM
DISPOSITIF DE SUPPORT D'AFFICHAGE DE DOCUMENTS, TERMINAL, PROCÉDÉ D'AFFICHAGE DE DOCUMENTS ET SUPPORT DE STOCKAGE LISIBLE PAR ORDINATEUR POUR UN PROGRAMME INFORMATIQUE

(30) Priority: 21.01.2015 JP 2015009650
(43) Date of publication of application: 27.07.2016
(73) Proprietor: Konica Minolta, Inc., Tokyo 100-7015 (JP)
(72) Inventor: Moriwaki, Kagumi, Tokyo, 100-7015 (JP); Ogino, Shinya, Tokyo, 100-7015 (JP); Takamura, Shunsuke, Tokyo, 100-7015 (JP); Takeuchi, Kazuma, Tokyo, 100-7015 (JP); Hoshino, Noriko, Tokyo, 100-7015 (JP); Tsubotani, Ikuko, Tokyo, 100-7015 (JP); Kawabuchi, Yoichi, Tokyo, 100-7015 (JP)
(74) Representative: Henkel, Breuer & Partner

(56) References cited:
- JP-A- 2012 129 626
- US-A1- 2002 073 163
- US-A1- 2013 073 965
- US-A1- 2013 290 872
- US-A1- 2014 351 715

## Description

The present invention relates to a technology for displaying one document in a plurality of terminals.

In recent years, more and more attendees (users) use portable terminals such as a smartphone, a tablet computer, or a laptop personal computer to look at a document which is a meeting material.

A system is known which enables each attendee to display a common document in his/her terminal. Such a system allows each attendee to display a part of the common document which is discussed or a part related thereto in his/her terminal in any format by enlarging or scrolling through the document.

As the technology for sharing a meeting material in a plurality of terminals, the technology described below has been proposed (Japanese Unexamined Patent Application Publication No. 2012-129626). According to the technology, when shared data is displayed on client terminals, the display state of conference data of each conference client participating in a conference is evaluated according to an evaluation rule, the degree of attention of conference data is calculated based on the evaluation value, and an initial layout for a conference client who participated in the midway of the conference is determined according to the order of the degree of attention.

Meanwhile, with a smartphone or a small tablet computer, a resolution for display is low or a screen size is limited. This often makes it difficult for an attendee to see what is described when the entirety of a document is displayed in the smartphone or the small tablet computer. When an attendee enlarges and views a common document with the intention of grasping the content of the document, only a part of the document is displayed. Therefore, a user tends to fail to keep track of a part of the document to be noticed by using such a terminal to view the document as compared to the case of using a terminal having a high resolution, e.g., a stationary display terminal. Finding the part of the document to be noticed is also hard for the user.

JP 2012 129 626 A discloses a multi-point communication conference device which manages multiple client terminals participating in a multi-point communication conference, shares shared data including any of material, images, voice, an electronic whiteboard which the multiple client terminals use in the conference, evaluates the display state of conference data of each conference client participating in the conference according to an evaluation rule when the shared data is displayed on the client terminals, calculates the degree of attention of conference data based on the evaluation value, determines an initial layout for a conference client who participated in the midway of the conference according to the order of the degree of attention, and thus makes it possible for the midway participant to check material having a high possibility of being used in active discussion.

US 2014 351 715 A discloses a method which includes establishing a communications session between a first endpoint that displays a shared desktop and a second endpoint that has a display screen, identifying an active region that is part of the shared desktop, and providing an interface on the second endpoint that obtains an input that indicates whether a representation of the active region is to be automatically displayed on the display screen.

US 2007 073 163 A1 discloses a techniques allowing for impromptu access to documents in the native application format. The collaboration of users within a document is facilitated by allowing the users to indicate context within the document for collaboration based on the display capabilities of each user's device.

It is therefore desirable to, when a common document is displayed in a plurality of terminals and is viewed by a plurality of users, inform one of the users of a part of the document to which the other users pay attention.

The above object is achieved by means of a document sharing system according to claim 1 and a document display method according to claim 9. The dependent claims are directed to different advantageous aspects of the invention.

These and other characteristics and objects of the present invention will become more apparent by the following descriptions of preferred embodiments with reference to drawings.

Reference will now be made, by way of example, to the accompanying drawings, in which:
Fig. 1 is a diagram showing an example of the overall configuration of a document sharing system.
Fig. 2 is a diagram showing an example of the hardware configuration of a document server.
Fig. 3 is a diagram showing an example of the hardware configuration of a terminal.
Fig. 4 is a diagram showing another example of the hardware configuration of a terminal.
Fig. 5 is a diagram showing an example of the functional configuration of a document server and a terminal.
Fig. 6 is a diagram showing an example of a document.
Fig. 7 is a diagram showing an example of a component table and object data.
Fig. 8 is a diagram showing an example of terminal data.
Fig. 9 is a diagram showing an example of a focus region.
Fig. 10 is a transition diagram of a focus region.
Fig. 11 is a diagram for depicting an example of a method for calculating a point of focus.
Fig. 12 is a diagram for depicting another example of a method for calculating a point of focus.
Fig. 13 is a flowchart depicting an example of the flow of the entire processing of a document server.
Fig. 14 are flowcharts depicting an example of the flow of a point of focus calculation process.
Fig. 15 is a flowchart depicting an example of the flow of the entire processing of a terminal.
Fig. 16 are flowcharts depicting an example of the flow of a point of focus calculation process according to a second embodiment.
Fig. 17 is a flowchart depicting an example of the flow of a point of focus calculation process according to a third embodiment.
Fig. 18 is a diagram showing an example of a component table including a plurality of editions according to a fourth embodiment.
Fig. 19 is a diagram showing an example of terminal data.
Fig. 20 is a flowchart depicting an example of the flow of a point of focus calculation process.

Hereinafter, the present invention will be explained in more detail with reference to embodiments and drawings.

### [First Embodiment]

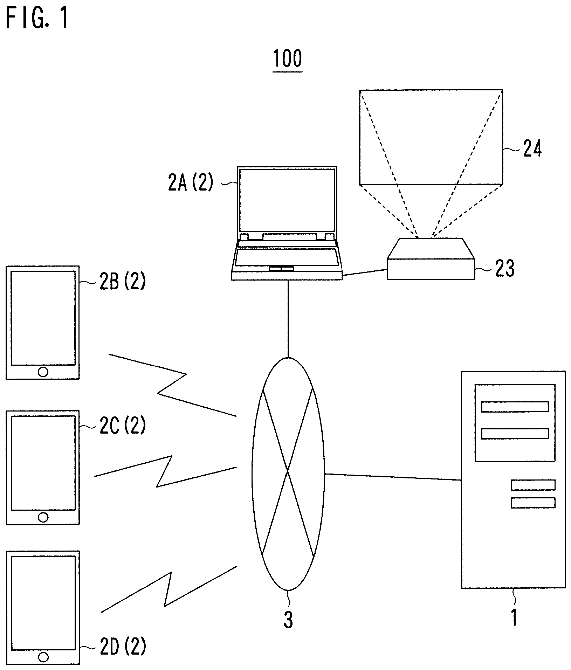

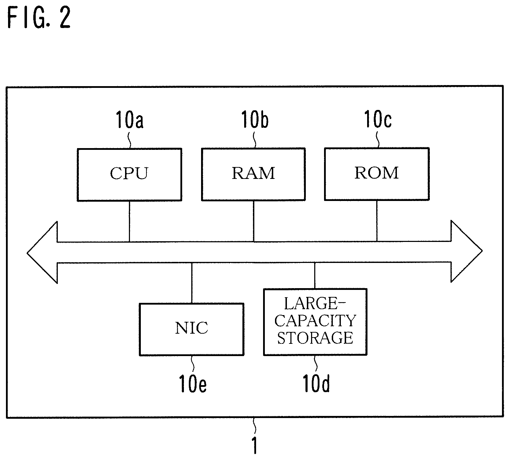

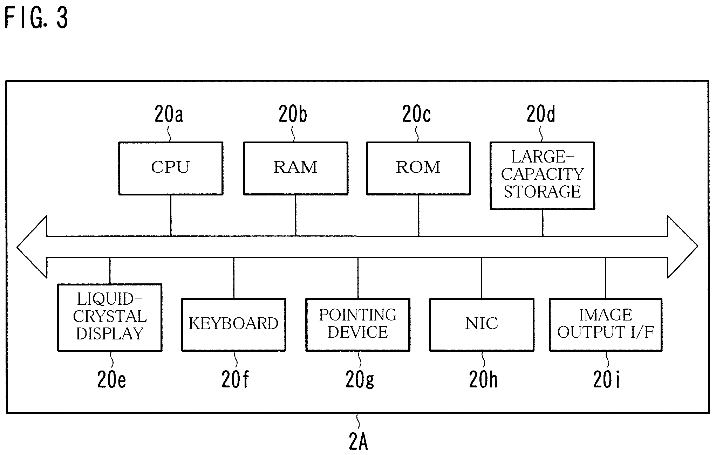

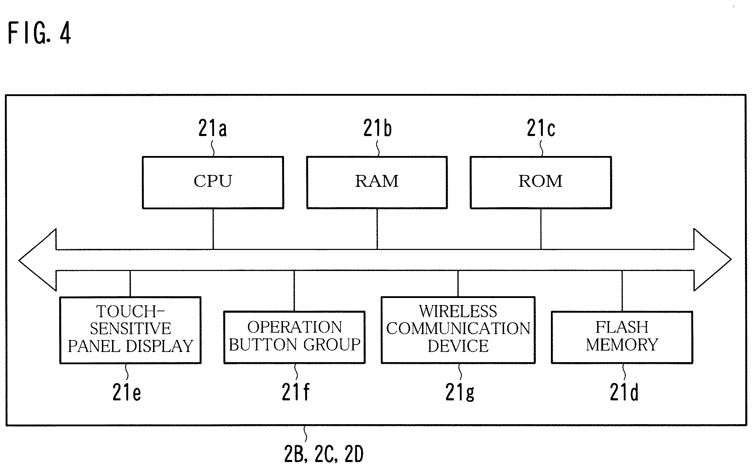

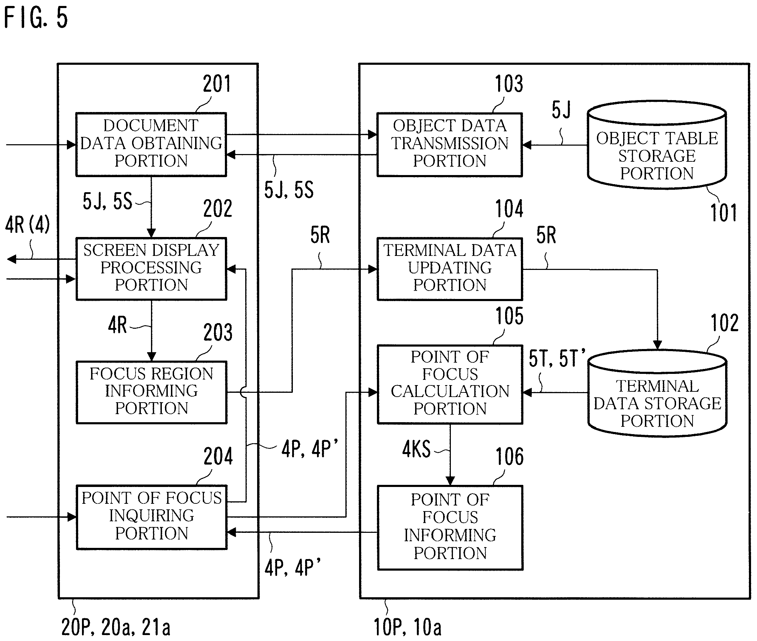

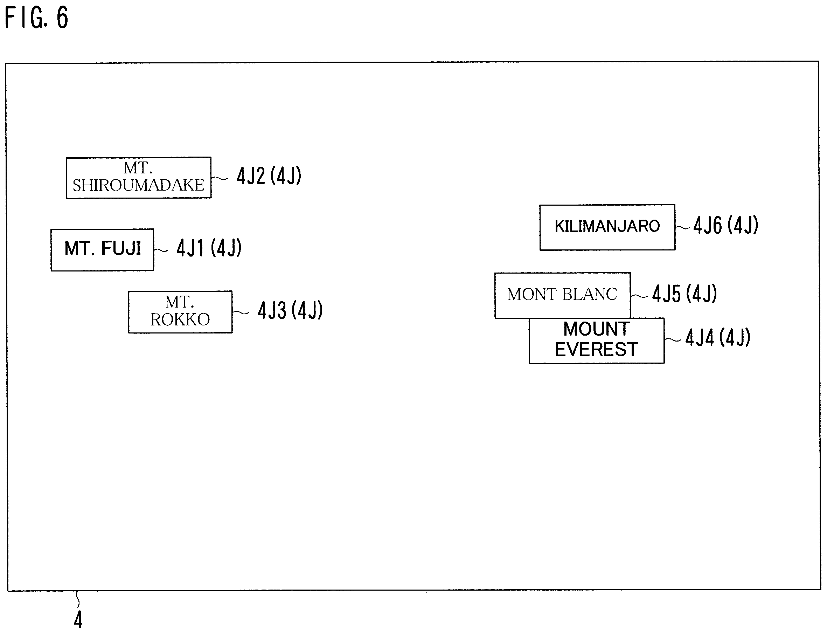

Fig. 1 is a diagram showing an example of the overall configuration of a document sharing system 100. Fig. 2 is a diagram showing an example of the hardware configuration of a document server 1. Fig. 3 is a diagram showing an example of the hardware configuration of a terminal 2A. Fig. 4 is a diagram showing another example of the hardware configuration of terminals 2B, 2C, and 2D. Fig. 5 is a diagram showing an example of the functional configuration of the document server 1 and the terminal 2. Fig. 6 is a diagram showing an example of a document 4.

As shown in Fig. 1, the document sharing system 100 is configured of the document server 1, the three terminals 2 or more, a projector 23 such as a liquid-crystal projector, a projection surface 24, a communication line 3, and so on. Hereinafter, the terminals 2 may be described separately as a "terminal 2A", a "terminal 2B", ..., and so on.

The document sharing system 100 enables users who are in locations away from one another to share a document and to view the document at the same time.

The document server 1 and the individual terminals 2 are configured to perform communication with one another via the communication line 3. Examples of the communication line 3 are a public line, the Internet, and a Local Area Network (LAN) line.

The document server 1 manages data used for displaying a document and distributes the data to the individual terminals 2.

Referring to Fig. 2, the document server 1 is configured of a Central Processing Unit (CPU) 10a, a Random Access Memory (RAM) 10b, a Read Only Memory (ROM) 10c, a large-capacity storage 10d, a Network Interface Card (NIC) 10e, and so on.

The NIC 10e performs communication with the terminal 2 in accordance with a protocol such as Transmission Control Protocol/Internet Protocol (TCP/IP).

The ROM 10c or the large-capacity storage 10d stores, therein, a document management program 10P which is a computer program described later. The document management program 10P is loaded into the RAM 10b and is executed by the CPU 10a. Examples of the large-capacity storage 10d are a hard disk drive and a Solid State Drive (SSD). The large-capacity storage 10d or the RAM 10b function as memories for storing various types of information, e.g., the document 4, a component table, object data, and terminal data described later.

The terminal 2 is a client of the document server 1. The terminal 2 displays a document based on data received from the document server 1. The terminal 2 may be a personal computer, a smartphone, a tablet computer, or the like. The following description provides an example in which, of the plurality of terminals 2, the terminal 2A is a personal computer and the terminals 2B, 2C, and 2D are small tablet computers.

Referring to Fig. 3, the terminal 2A is configured of a CPU 20a, a RAM 20b, a ROM 20c, a large-capacity storage 20d, a display 20e such as a liquid-crystal display, a keyboard 20f, a pointing device 20g, an NIC 20h, an image output interface 20i, and so on.

The display 20e serves to display a part or the whole of a document in accordance with operation by a user.

The keyboard 20f and the pointing device 20g are used for the user to enter a command or information.

The NIC 20h performs communication with the document server 1 in accordance with a protocol such as TCP/IP.

The image output interface 20i is a circuit for outputting an image signal. The image output interface 20i is, for example, High-Definition Multimedia Interface (HDMI; registered trademark).

The projector 23 is connected to the image output interface 20i. The projector 23 is used to display a screen, which is the same as that displayed on the display 20e, on the projection surface 24, e.g., a wall or a cinema screen. This enables a plurality of users to view the document easily at one time.

The ROM 20c or the large-capacity storage 20d stores, therein, a document browsing program 20P which is a computer program described later. The document browsing program 20P is loaded into the RAM 20b and is executed by the CPU 20a.

Referring to Fig. 4, each of the terminals 2B, 2C, and 2D is configured of a CPU 21a, a RAM 21b, a ROM 21c, a flash memory 21d, a touch-sensitive panel display 21e, an operation button group 21f, a wireless communication device 21g, and so on.

As with the display 20e, a part or the whole of a document is displayed in the touch-sensitive panel display 21e. The touch-sensitive panel display 21e detects a touched location and informs the CPU 21a of the touched location.

The operation button group 21f includes a button for returning to the start screen, a button for controlling sound volume, and a button for switching between ON and OFF of the power supply.

The wireless communication device 21g performs communication via a base station with the document server 1 in accordance with a protocol such as TCP/IP based on the standard for wireless LAN, specifically, the standard for Institute of Electrical and Electronics Engineers (IEEE) 802.11.

The ROM 21c or the flash memory 21d stores, therein, a document browsing program 21P which is a computer program described later. The document browsing program 21P is loaded into the RAM 21b and is executed by the CPU 21a.

The CPU 10a executes the document management program 10P, so that functions of an object table storage portion 101, a terminal data storage portion 102, an object data transmission portion 103, a terminal data updating portion 104, a point of focus calculation portion 105, a point of focus informing portion 106, and so on shown in Fig. 5 are implemented in the document server 1 (the object table storage portion 101 and the terminal data storage portion 102 are implemented by the large-capacity storage 10d or the RAM 10b). The CPU 10a executing the document management program 10P also functions as a management portion which manages a shared document displayed in terminals each of which has a display and allows the terminals to display independently any part of the shared document.

The CPU 20a executes the document browsing program 20P, or, alternatively, the CPU 21a executes the document browsing program 21P. Thereby, the functions of a document data obtaining portion 201, a screen display processing portion 202, a focus region informing portion 203, a point of focus inquiring portion 204, all of which are shown in Fig. 5, are implemented in the terminal 2. The terminals 2A through 2D are configured to enable users to look at a common document 4 concurrently and also to display different parts of the common document 4 in the individual display units arbitrarily.

The description goes on to the functions of the document server 1 and the functions of the terminal 2, by taking an example in which the document (shared document) 4 shown in Fig. 6 is displayed at the same time in the terminals 2A through 2D. The document 4 includes a plurality of objects 4J. The objects 4J are sometimes distinguished from one another as an "object 4J1", an "object 4J2", ..., and so on.

### [Data]

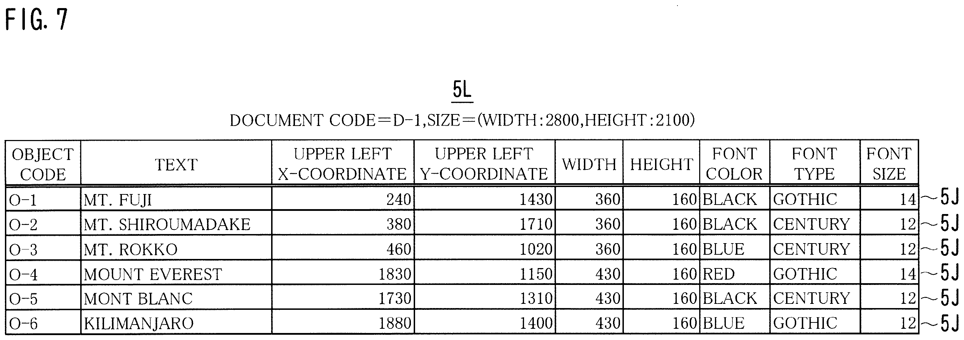

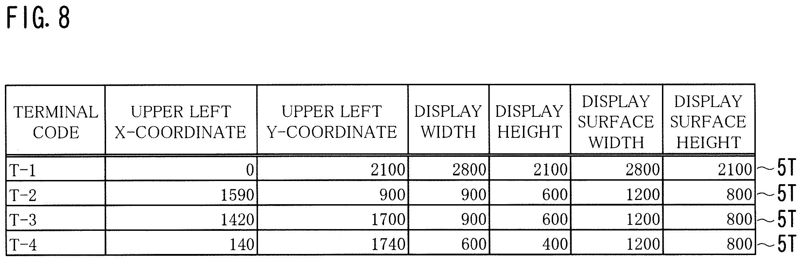

Fig. 7 shows an example of a component table 5L and object data 5J. Fig. 8 is a diagram showing an example of terminal data 5T.

The object table storage portion 101 stores, for each document 4, the component table 5L. As shown in Fig. 7, the component table 5L has object data 5J for each of the objects 4 constituting the document 4 corresponding to the subject component table 5L. The component table 5L is associated with an identifier (document code) of the document 4 and a size (width and height) of the document 4.

In the object data 5J, an "object code" is a code for identifying the object 4J corresponding to that object data 5J. A "text" is a character string of the object 4J.

In the object data 5J, "upper left X-coordinate" and "upper left Y-coordinate" are the X-coordinate (coordinate in the lateral direction) and the Y-coordinate (coordinate in the longitudinal direction) of the upper left end of the object 4J, respectively. The origin is the lower left end of the document 4. A "width" and a "height" is the width and the height of the object 4J, respectively.

In the object data 5J, "font color", "font type", and "font size" are the color, type, and size of a font used in the text of the object 4J, respectively.

The document 4 is created in advance by using the terminals 2A through 2D or an external terminal, and registered, as a shared document, in the document server 1 from the terminals 2A through 2D or the external terminal via a network. When creating the document 4, the user designates, for the document server 1, the text, upper left X-coordinate, upper left Y-coordinate, width, height, font color, font type, and font size of each of the objects 4J. The details thereof may be designated by using a text editor or an editor used only for document creation.

When the user uses, for example, the terminals 2A through 2D to request the document server 1 to register a document, a component table 5L for a document 4 is newly created in the object table storage portion 101 of the document server 1, and a document identifier of the document 4 is newly issued and the document identifier is associated with the component table 5L thus created. Then, data indicating the designated details are generated for each of the objects 4J based on data on the document transmitted from the terminals 2A through 2D, and so on. The data thus created is stored (registered) as the object data 5J in the component table 5L.

As shown in Fig. 8, the terminal data storage portion 102 stores the terminal data 5T for each terminal 2.

In the terminal data 5T, a "terminal code" is a code for identifying the terminal 2 corresponding to the subject terminal data 5T.

In the terminal data 5T, a "display surface width" and a "display surface height" represent the resolution of what is displayed in the width direction and the resolution of what is displayed in the height direction, respectively, of the display 20e of the terminal 2 or the touch-sensitive panel display 21e.

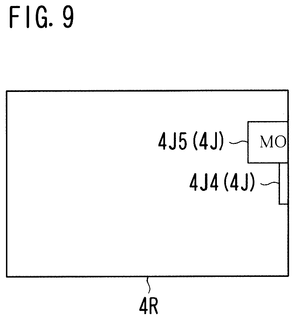

In the terminal data 5T, a "focus region width" and a "focus region height" are the width and height of a region of the document 4 currently displayed in the subject terminal 2, respectively. Hereinafter, of the document 4, a region currently displayed is referred to as a "focus region 4R" (see Fig. 9).

In the terminal data 5T, an "upper left X-coordinate" and an "upper left Y-coordinate" are the X-coordinate and the Y-coordinate of the upper left end of the focus region 4R, respectively. In this embodiment, the X-coordinate and the Y-coordinate are used as the reference for identifying the focus region 4R. This embodiment is not limited thereto. The other coordinates, e.g., the upper right X-coordinate and the upper right Y-coordinate, may be used as the reference.

The terminal code, the display surface width, and the display surface height are fixed values and are indicated in advance in the terminal data 5T. The focus region width, the focus region height, the upper left X-coordinate, and the upper left Y-coordinate are not indicated in the terminal data 5T when the terminal 2 has not yet displayed the document 4. They are indicated in the terminal data 5T as described later when the terminal 2 displays the document 4. The focus region width, the focus region height, the upper left X-coordinate, and the upper left Y-coordinate are changed in accordance with operation on the terminal 2 by the user.

### [Basic process for displaying document 4]

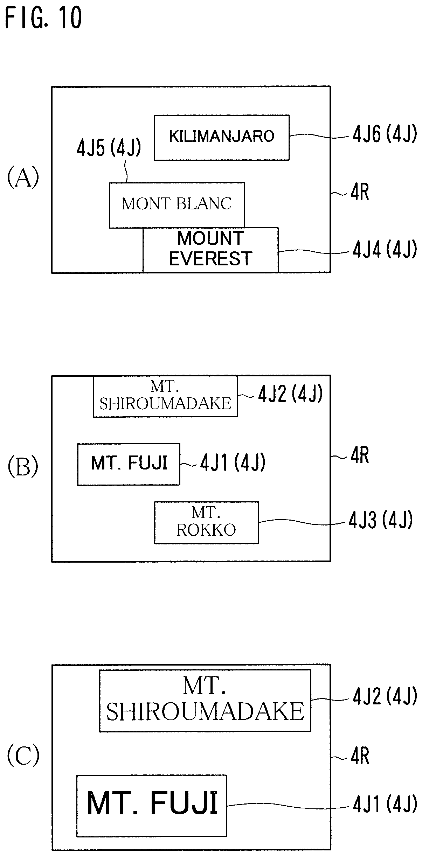

Fig. 9 shows an example of the focus region 4R. Fig. 10 is a transition diagram of the focus region 4R. For simplicity of explanation, the following description is provided only based on the assumption that a user views a document registered in advance in the document server 1. The embodiment is, however, not limited thereto. The user may write to a shared document, erase an object in the document, and add a new object to the document.

The user of the terminal 2A operates the terminal 2A to run the document browsing program 20P. The user then enters a document code of the document 4.

In response to this operation, the document data obtaining portion 201 of the terminal 2A requests, from the document server 1, data used for displaying the document 4. At this time, the document server 1 is given the document code.

With the document server 1, the object data transmission portion 103 sends the data for displaying the document 4 to the terminal 2A. For example, the object data transmission portion 103 sends a plurality of sets of object data 5J stored in the component table 5L (see Fig. 7) corresponding to the document code and size data 5S indicating the size of the document 4. The size of the document 4 is associated with the component table 5L. Alternatively, the object data transmission portion 103 may generate image data on the document 4 based on the sets of object data 5J and the size of the document 4, and send the image data to the terminal 2A. The following description takes an example of sending the object data 5J and the size data 5S.

With the terminal 2A, the document data obtaining portion 201 obtains, as data for display, the object data 5J and the size data 5S.

When the object data 5J and the size data 5S are obtained, the screen display processing portion 202 displays the document 4 on the display 20e.

To be specific, the screen display processing portion 202 renders a frame representing the entire range of the document 4 based on the size data 5S, and displays the frame. The screen display processing portion 202 then renders each of the objects 4J in accordance with the text, width, height, font color, font type, and font size indicated in the object data 5J of the corresponding object 4J. The screen display processing portion 202 then displays each of the objects 4J at a position corresponding to the upper left X-coordinate and the upper left Y-coordinate within the frame. The coordinates are indicated in the corresponding object data 5J.

In this example, as shown in Figs. 7 and 8, the resolution (display surface width and display surface height) of the display 20e of the terminal 2A is equal to the size (width and height) of the document 4. Therefore, the entirety of the document 4 is displayed on the display 20e unless the document 4 is enlarged. At first, the screen display processing portion 202 displays the document 4 without zooming in and out, i.e., displays the document 4 at 100 % scaling factor. Thus, at first, the range of the focus region 4R in the terminal 2A matches the range of the entirety of the document 4. The upper left end of the focus region 4R matches the upper left end of the document 4.

Since the projector 23 is connected to the terminal 2A, the projector 23 is used to display (project) the document 4 on the projection surface 24.

Likewise, with the terminals 2B, 2C, and 2D, the users thereof perform the operation similar to that described above. In response to the user operation, the document data obtaining portion 201 and the screen display processing portion 202 of each of the terminals 2B, 2C, and 2D perform the process similar to that described above.

However, in each of the terminals 2B, 2C, and 2D, the resolution of the touch-sensitive panel display 21e is lower than that of the display 20e of the terminal 2A. In addition, the touch-sensitive panel display 21e of each of the terminals 2B, 2C, and 2D is smaller than the size of the document 4. For these reasons, the entirety of the document 4 cannot be displayed unless the document 4 is reduced.

To address this, the screen display processing portion 202 of each of the terminals 2B, 2C, and 2D, first, displays a default region of the document 4 at 100 % scaling factor as the focus region 4R. For example, if the default region is the central region, then the focus region 4R is displayed as shown in Fig. 9. Alternatively, it is possible to reduce the document 4 with reference to the resolution to display the resultant.

The user performs predetermined operation to scroll through the document 4, enlarge or reduce the document 4.

In the case of the focus region 4R as shown in (A) of Fig. 10, the user flicks his/her finger to the right against the touch-sensitive panel display 21e. In response to the flick, the screen display processing portion 202 scrolls through the document 4 to the right. This changes the focus region 4R from the state of (A) to the state of (B) of Fig. 10. After that, the user pinches out his/her fingers against the touch-sensitive panel display 21e. In response to the pinch-out, the screen display processing portion 202 enlarges the document 4. This changes the focus region 4R from the state of (B) to the state of (C) of Fig. 10.

In response to the document 4 displayed, the focus region informing portion 203 sends, to the document server 1, focus region data 5R indicating the X-coordinate and the Y-coordinate of the upper left end of the focus region 4R, and a partial size. The partial size is a size (width and height) of a part included in the focus region 4R of the document 4. In the case of display at 100 % scaling factor, the partial size is equal to the resolution of display on the terminal 2. The partial size is reduced when enlarge operation is performed. The partial size is increased when reduction operation is performed.

With the document server 1, when receiving the focus region data 5R form the terminal 2, the terminal data updating portion 104 writes, onto the terminal data 5T (see Fig. 8) of the terminal 2, the coordinates (X-coordinate and Y-coordinate) of the upper left end of the focus region 4R and the partial size (width and height) indicated in the focus region data 5R, respectively as the upper left X-coordinate, upper left Y-coordinate, display width, and display height.

Every time when the focus region 4R is changed, the focus region informing portion 203 sends, to the document server 1, focus region data 5R indicating the post-change X-coordinate and the post-change Y-coordinate of the upper left end of the post-change focus region 4R and the post-change partial size (width and height) thereof.

In response to the receipt of the focus region data 5R, the terminal data updating portion 104 replaces the upper left X-coordinate, the upper left Y-coordinate, the display width, and the display height indicated in the terminal data 5T on the terminal 2 with the X-coordinate, the Y-coordinate, the width, and the height indicated in the focus region data 5R received.

### [Movement to portion of interest]

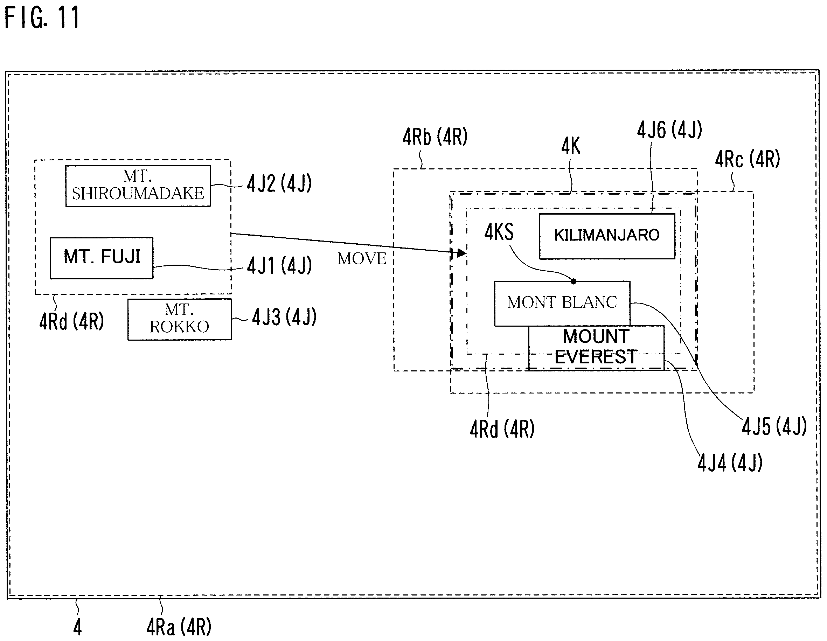

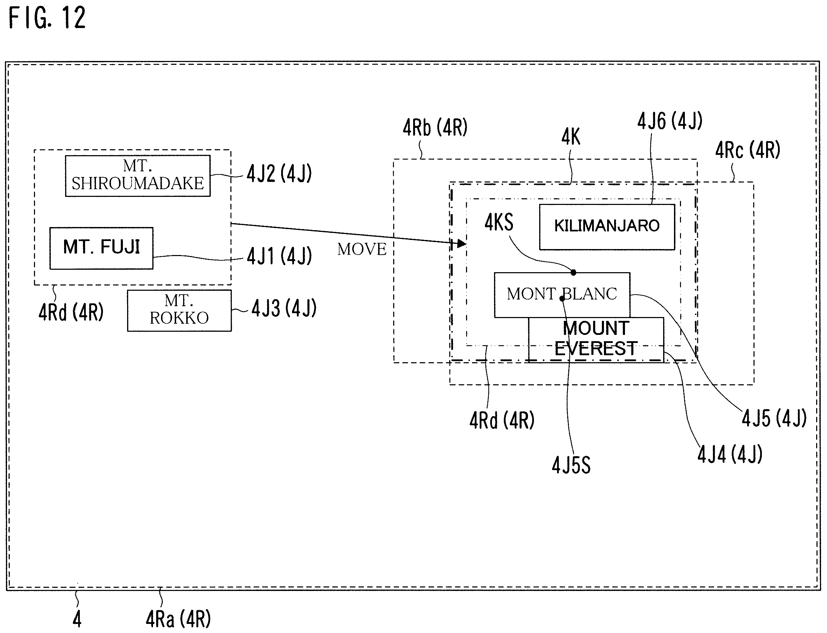

Fig. 11 depicts an example of a method for calculating a point of focus. Fig. 12 depicts another example of a method for calculating a point of focus.

For example, it is supposed that users use their terminals 2 at different locations to attend a television conference while viewing a document 4. In such a case, attendees sometimes discuss while paying attention to a specific part of the document 4. If the users, who are attendees of the conference at different locations, are allowed to use their terminals to freely view an arbitral part of a shared document, the conference progresses while each user looks at the arbitral part of the shared document. In such a case, the users cannot often find which part of the shared document 4 is focused in the discussion and fail to keep track of the conference progress. In particular, if the terminal 2 is a small tablet computer, the user easily loses track of a portion of a document to which attention is paid in the conference while he/she views the document with a specific part thereof enlarged. This is because the small tablet computer has a small display screen and a low resolution for display in many cases.

According to the document sharing system 100, a portion of interest can be displayed as described below. The description goes on to the case where the user of the terminal 2D loses track of the portion of interest.

When losing track of the portion of interest, the user of the terminal 2D performs predetermined operation on the terminal 2D to move to a point of focus. For example, the user double-taps the lower right end on the touch-sensitive panel display 21e. Alternatively, the user of the terminal 2D presses a specific software key appearing on the touch-sensitive panel display 21e. Yet alternatively, the user makes a specific gesture on the touch-sensitive panel display 21e. Yet alternatively, the user presses a specific key of the operation button group 21f of the terminal 2D. Yet alternatively, a microphone is provided in the terminal 2D and the user may give a predetermined audio command to the microphone.

In response to this operation, the point of focus inquiring portion 204 of the terminal 2D inquires of the document server 1 about the center of the portion of interest (hereinafter, referred to as a "point of focus").

With the document server 1, when the inquiry from the terminal 2D is received, the point of focus calculation portion 105 calculates the point of focus according to the following steps.

The point of focus calculation portion 105 refers to the terminal data 5T (see Fig. 8) of each of the terminals 2 other than the terminal 2D, namely, the terminals 2A, 2B, and 2C, and identifies the individual focus regions 4R therein.

The point of focus calculation portion 105 locates a common region 4K which is common to all of the three focus regions 4R. For example, it is supposed that the focus regions 4R of the terminals 2A, 2B, and 2C are focus regions 4Ra, 4Rb, and 4Rc, respectively denoted by dotted lines of Fig. 11. In such a case, the point of focus calculation portion 105 designates, as the common region 4K, a region denoted by a dot-dash line. A focus region 4Rd denoted by a dotted line is the focus region 4R of the terminal 2D. The focus region 4Rd is smaller than each of the focus region 4Rb and 4Rc while the terminals 2B, 2C, and 2D have the same resolution for display. This is because the terminal 2D enlarges the document 4 for display.

The point of focus calculation portion 105 then calculates, as coordinates of the point of focus, the coordinates of the center 4KS of the common region 4K. When the point of focus calculation portion 105 calculates the coordinates of the point of focus, the point of focus informing portion 106 sends point of focus data 5P indicating the coordinates of the point of focus to the terminal 2D.

With the terminal 2D, when the point of focus data 5P is sent from the document server 1, the screen display processing portion 202 scrolls through the document 4 in such a manner that a point, of the document 4, corresponding to the coordinates indicated in the point of focus data 5P centers on the touch-sensitive panel display 21e. Scaling factor for display remains unchanged. This changes the position of the focus region 4Rd to the position indicated by an alternate long and short dashes line shown in Fig. 11.

Alternatively, the point of focus calculation portion 105 may calculate a point of focus in the following manner. Similarly to the foregoing case, the point of focus calculation portion 105 locates the focus regions 4R of the other terminals 2 to designate the common region 4K.

The point of focus calculation portion 105 calculates the distance between the center of each of the objects 4J and the center of the common region 4K (center 4KS). The point of focus calculation portion 105 then obtains, as the point of focus, coordinates of the center of the object 4J having the shortest distance, i.e., the object 4J closest to the center of the common region 4K.

In the example of Fig 11, a distance L between the center 4J5S of the object 4J5 and the center 4KS is shorter than any other distances. Thus, the center 4J5S of the object 4J5 is determined to be the center of the portion of interest as shown in Fig. 12.

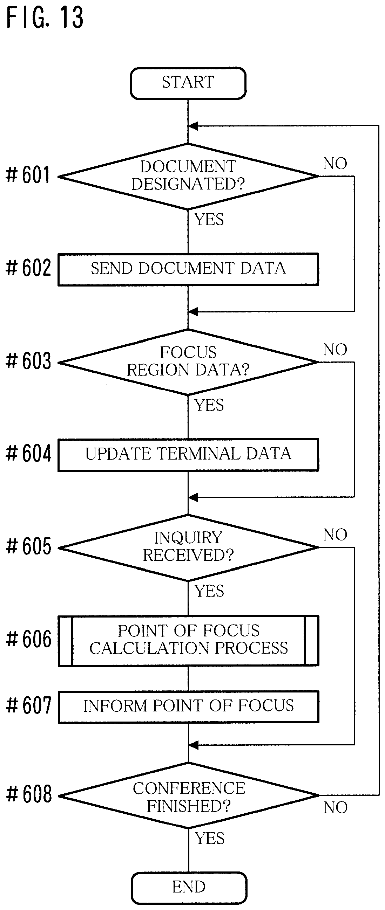

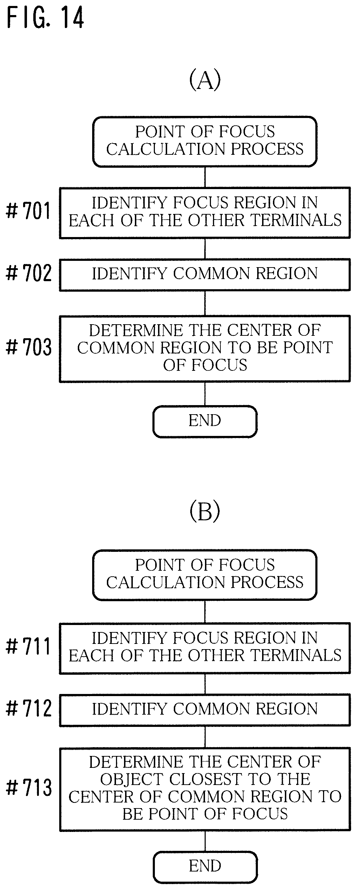

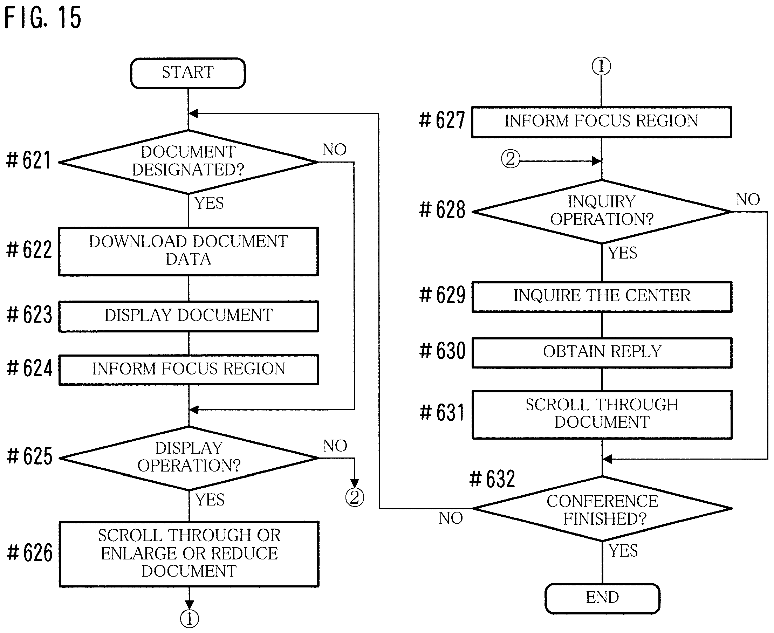

Fig. 13 is a flowchart depicting an example of the flow of the entire processing of the document server 1. Fig. 14 are flowcharts depicting an example of the flow of a point of focus calculation process. Fig. 15 is a flowchart depicting an example of the flow of the entire processing of the terminal 2.

With reference to the flowcharts, the description goes onto the flow of the entire processing of the document server 1 and the terminal 2 by taking an example in which users at different locations attend a conference.

Every time receiving data and so on during the conference from the terminal 2, the document server 1 performs processing as shown in Fig. 13. On the other hand, the terminal 2 performs processing as shown in Fig. 15 in accordance with user operation, data received from the document server 1, and so on.

When the user designates a document code of the document 4 (YES in Step #621 of Fig. 15), the terminal 2 informs the document server 1 of the document code to download the object data 5J and the size data 5S of the document 4 from the document server 1 (Step #622). The terminal 2 displays the document 4 based on the object data 5J and the size data 5S (Step #623). Depending on the resolution for display, in some cases, the entirety of the document 4 can be displayed, and in other cases, only a part thereof can be displayed. The terminal 2 transmits the focus region data 5R indicating the displayed part, namely, the focus region 4R, to the document server 1 (Step #624) .

When the document server 1 is given the document code by the terminal 2 (YES in Step #601 of Fig. 13), the document server 1 identifies the component table 5L (see Fig. 7) of the document 4 based on the document code, and sends, to the terminal 2, the object data 5J stored in the component table 5L and the size data 5S corresponding to the component table 5L (Step #602). Thereafter, when receiving the focus region data 5R (YES in Step #603), the document server 1 updates the terminal data 5T (see Fig. 8) on the terminal 2 so that the details indicated in the focus region data 5R are reflected in the terminal data 5T (Step #604).

When the user flicks the touch-sensitive panel display 21e on which the document 4 is displayed, pinches in, or pinches out his/her fingers against the touch-sensitive panel display 21e (YES in Step #625), the terminal 2 works to scroll through, reduce, or enlarge the document 4 in accordance with the operation (Step #626). This makes a change to the focus region 4R. The terminal 2 transmits the focus region data 5R indicating the position and size of the new focus region 4R to the document server 1 (Step #627).

When receiving the focus region data 5R (YES in Step #603), the document server 1 updates the terminal data 5T on the terminal 2 as discussed above (Step #604).

When the user performs inquiry operation (YES in Step #628), the terminal 2 makes an inquiry to the document server 1 about the center (Step #629).

When receiving the inquiry from the terminal 2 (YES in Step #605), the document server 1 calculates coordinates of the point of focus (Step #606) to send a response to the inquiry to the terminal 2 (Step #607). The point of focus is calculated based on the subroutine shown in (A) of Fig. 14. To be specific, first, the point of focus calculation portion 105 identifies the focus region 4R in each of the terminals 2 other than the terminal 2D, i.e., the terminal 2A, the terminal 2B, and the terminal 2C, based on the individual sets of terminal data 5T (Step #701). The point of focus calculation portion 105 then identifies a common region 4K which is common to all the three focus regions 4R (Step #702), and calculates coordinates of the center 4KS of the common region 4K as the coordinates of the point of focus (Step #703). Alternatively, the point of focus calculation portion 105 identifies the focus region 4R in each of the other terminals 2 based on the subroutine shown in (B) of Fig. 14 (Step #711). After the common region 4K is identified (Step #712), the point of focus calculation portion 105 calculates the distance between the center of each of the objects 4J and the center (center 4KS) of the common region 4K to obtain, as the point of focus, coordinates of the center of the object 4J having the shortest distance (Step #713).

When receiving the response from the document server 1 (Step #630), the terminal 2 scrolls through the document 4 in such a manner that the point of focus centers on the display 20e of the subject terminal 2 or on the touch-sensitive panel display 21e (Step #631).

According to this embodiment, it is possible to display, for a user who loses track of a part of the document 4 to which the other users pay attention, the part on the terminal 2 of the user. Stated differently, when a common document is displayed in the terminals 2 and is viewed by a plurality of users, it is possible to inform one of the users of a part of the document to which the other users pay attention. A part of the document 4 to which many users pay attention can be identified even if a device for directly detecting the point of focus by each user, e.g., a line-of-sight detection device, is not provided. This enables determination of point of focus by means of a simple device structure and system structure.

According to this embodiment, the document server 1 informs the terminal 2 of the point of focus. The embodiment is not limited thereto. The document server 1 may inform the terminal 2 of the common region 4K. In such a case, the terminal 2 preferably displays the common region 4K by enlarging or reducing the same appropriately to correspond to the size of the display 20e or the touch-sensitive panel display 21e. This is similarly applied to the following other embodiments.

When there is a plurality of parts of regions noted by two or more of the terminals 2, it is preferably to handle, as the focus region, a region noted by more terminals 2 or a region having a larger overlap area to which the terminals 2 pay attention. When the number of terminals 2 or the area of the overlap regions are the same in the parts, the focus region is preferably determined in accordance with predetermined rules (for example, to give priority to a region including a predetermined terminal, to give priority to a region including a terminal which first participated in the document sharing system.

### [Second Embodiment]

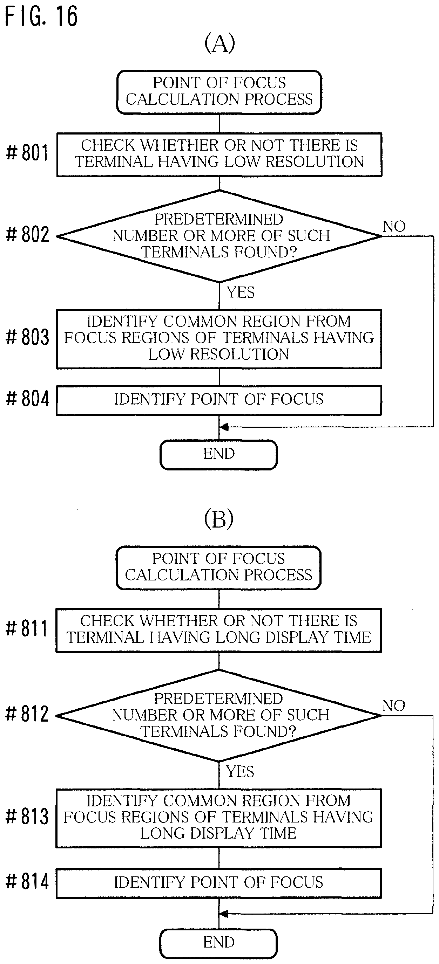

Fig. 16 are flowcharts depicting an example of the flow of a point of focus calculation process according to the second embodiment.

In the first embodiment, when receiving an inquiry about a point of focus from a terminal 2, the document server 1 identifies, in Step #702 of (A) of Fig. 14 or Step #712 of (B) of Fig. 14, a part common to all the focus regions 4R of the other terminals 2 as the common region 4K. In contrast, in the second embodiment, the document server 1 identifies a part common to some of the focus regions 4R as the common region 4K. In respect of the other arrangements, the second embodiment is similar to the first embodiment. To be specific, in accordance with the subroutine showing the point of focus calculation process in the second embodiment as shown in (A) of Fig. 16, it is checked whether or not there is a terminal having a resolution equal to or lower than that of a target terminal to which a point of focus is to be informed (Step #801). If there are a predetermined number or more of terminals having a resolution equal to or lower than that of the target terminal (YES in Step #802), a common region is identified from the focus regions of the terminals (Step #803), and a process for identifying the point of focus is executed (Step #804). By executing this process, when receiving an inquiry from the terminal 2D, for example, the document server 1 identifies, as the common region 4K, a part common to the focus regions 4R of terminals 2 having the same resolution for display as that of the terminal 2D. Such terminals 2 are the terminal 2B and the terminal 2C in the illustrated example of Fig. 8. This enables movement to a point of focus of the user using a terminal having the same resolution or lower.

Alternatively, it is possible to identify, as the common region 4K, among the other terminals 2, a part common to the focus regions 4R of the terminals 2 in which a predetermined time (10 seconds, for example) has elapsed since the focus regions 4R were determined. Fig. 16 shows, in (B), a subroutine corresponding to the modified example. As shown in the drawing, a display elapsed time is checked for each of the terminals other than the terminal to which the point of focus is to be informed (Step #811). If there is a predetermined number or more of terminals in which the elapsed time is equal to or greater than a threshold (YES in Step #812), then a common region is identified from among the focus regions of the terminals (Step #813) and a process for identifying the point of focus is executed (Step #814). This process prevents a user using the terminal 2 in which the focus region 4R is not definite from being excluded from calculation of the point of focus, and also prevents a user probably losing track of a portion of interest from being included in calculation of the point of focus. The time elapsed from the determination of the focus region 4R is obtained by making a record of the time at which the focus region data 5R is received, and calculating the difference between the time and the current time.

### [Third Embodiment]

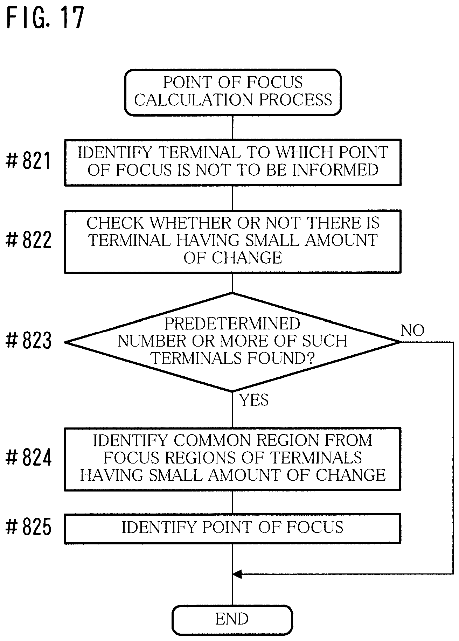

Determining a point of focus is probably difficult when an amount of change in focus region 4R is large. In this embodiment, in calculation of a point of focus, among the other terminals 2, a part common to terminals 2 in which an amount of change in focus region 4R per unit time is equal to or smaller than a predetermined amount (for example, speed at which the screen is scrolled through is equal to or smaller than a predetermined value) is identified as the common region 4K. In respect of the other arrangements, the third embodiment is similar to the first embodiment. Fig. 17 depicts a subroutine of a point of focus calculation process according to the third embodiment. As shown in Fig. 17, a focus region of each terminal other than a terminal to which a point of focus is to be informed is identified (Step #821), and it is checked whether or not there is a terminal having an amount of change in focus region equal to or smaller than a threshold (Step #822). If there is a predetermined number of such terminals (YES in Step #823), then a common region is identified from focus regions of terminals having a small amount of change (Step #824), and a process for identifying a point of focus is executed (Step #825).

### [Fourth Embodiment]

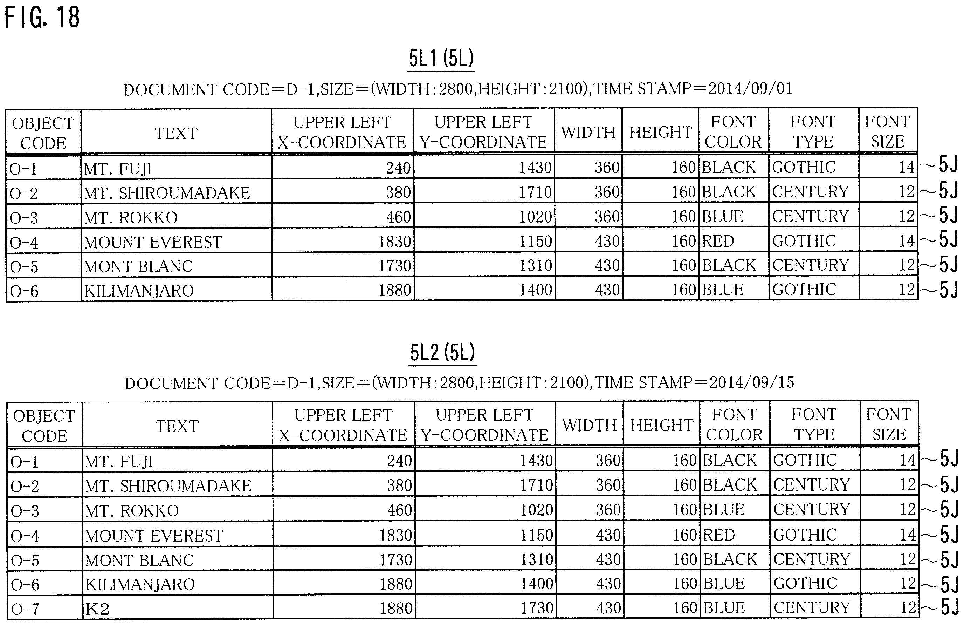

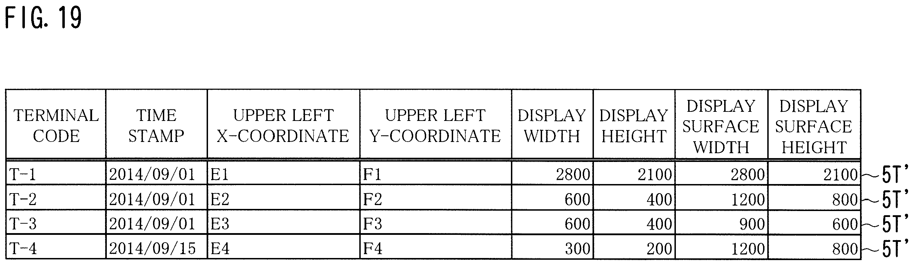

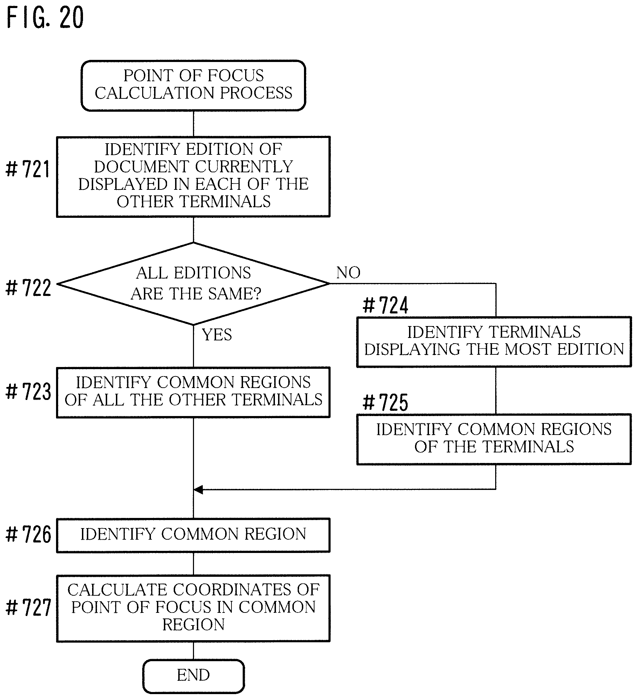

In some cases, a document is edited to create a plurality of editions, and a discussion is made based on the details of the past document in a conference, etc. In this embodiment, the individual portions of the document server 1 and the terminal 2 shown in Fig. 5 are configured to handle the document 4 in the following manner. In respect of the other arrangements, the fourth embodiment is similar to the first embodiment. Fig. 18 shows an example of the component table 5L. Fig. 19 shows an example of terminal data 5T'. Fig. 20 is a flowchart depicting an example of the flow of a point of focus calculation process.

As shown in Fig. 18, the object table storage portion 101 associates, for each edition (version) of the document 4, the component table 5L with a date at which the edition was edited, and stores the resultant therein. Such a date is hereinafter referred to as a "time stamp".

As shown in Fig. 19, the terminal data storage portion 102 stores the terminal data 5T' for each terminal 2. The terminal data 5T' basically indicates items similar to those indicated in the terminal data 5T (see Fig. 8). The terminal data 5T' also indicates the time stamp of the edition of the document 4 currently displayed in the terminal 2.

The user designates, into the terminal 2, not only the document code of the document 4 but also the time stamp of the edition he/she intends to look at.

In order to obtain data used for displaying the document 4, the document data obtaining portion 201 informs the document server 1 of the document code and time stamp designated.

The object data transmission portion 103 sends, to the requesting terminal 2, the object data 5J stored in the component table 5L corresponding to the document code and time stamp informed, and the size data 5S indicating the size corresponding thereto.

The screen display processing portion 202 displays the document 4 based on the object data 5J and the size data 5S.

When the document 4 is displayed, the focus region informing portion 203 sends the focus region data 5R' to the document server 1 (the reference 5R of Fig. 5 is changed to a reference 5R'). The focus region data 5R' indicates items basically similar to those indicated in the terminal data 5R. The terminal data 5R' also indicates the time stamp of the edition of the document 4 currently displayed in the terminal 2.

The focus region informing portion 203 sends the focus region data 5R' to the document server 1 also when the focus region 4R is changed.

When receiving the focus region data 5R' from the terminal 2, the terminal data updating portion 104 writes the details indicated in the focus region data 5R' into the terminal data 5T' of the terminal 2 as with the case where the focus region data 5R is received. Thereby, the time stamp in addition to the upper left X-coordinate, the upper left Y-coordinate, the display width, and the display height of the terminal data 5T' are updated.

When the user fails to keep track of which part of the document is focused during the conference, for example, he/she preferably performs predetermined operation on his/her terminal 2 as discussed above. In response to this operation, the point of focus inquiring portion 204 inquires of the document server 1 about the point of focus.

In response to the inquiry from the terminal 2 received, the point of focus calculation portion 105 performs calculation according to the steps shown in Fig. 20. Hereinafter, the method for calculation is described below by taking an example in which the terminal 2D made an inquiry.

The point of focus calculation portion 105 identifies the edition of the document 4 currently displayed in the terminals 2 based on the terminal data 5T' of the terminals 2 other than the terminal 2D (Step #721 of Fig.20). If the edition of the document 4 displayed in each of the terminals other than the terminal 2D is the same as the edition of the document displayed in the terminal 2D (YES in Step #722), then the focus region 4R of each of the terminals 2 is identified (Step #723). On the other hand, if the documents 4 displayed in the terminals other than the terminal 2D contain a document 4 having a edition different from that of the document displayed in the terminal 2D (No in Step #722), then the edition of the document 4 which is displayed in most terminals other than the terminal 2D is identified and terminals corresponding thereto are identified (Step #724). The focus region 4R is identified from among the extracted terminals (Step #725). In any of the cases, after that, the common region 4K which is common to all the focus regions 4R is identified (Step #726), and coordinates of the point of focus in the common region 4K are calculated (Step #727). As described in the first embodiment, coordinates of the point of focus may be the center of the common region 4K. Alternatively, coordinates of the point of focus may be coordinates of the center of the object 4J which has the shortest distance from the center of the common region 4K.

The point of focus informing portion 106 sends, to the inquiring terminal 2 (terminal 2D), point of focus data 5P' indicating the edition identified in Step #721 and the point of focus calculated in Step #724.

Documents displayed in all the terminals 2 other than the terminal 2D are not always the same edition as one another. When the documents displayed therein are different from one another in edition, the point of focus calculation portion 105 preferably identifies an edition displayed in most terminals in Step #721. In Step #722, among the terminals 2 other than the terminal 2D, the focus region 4R only of the terminal 2 displaying the identified edition is preferably identified. Stated differently, the focus region 4R in the terminal 2 displaying a different edition is not taken into consideration. In addition, as with the foregoing method, the focus region to be identified may be limited depending on the resolution for display, the amount of change, and so on.

When top two of the editions of the document 4 displayed in the terminals 2 other than the terminal 2D have the same value, the edition of a document in which a target region is to be set is preferably identified in accordance with predetermined rules (for example, to give priority to a region including a predetermined terminal 2, to give priority to a terminal 2 which first participated in the document sharing system 100.

When the point of focus data 5P' is received, the document data obtaining portion 201 and the screen display processing portion 202 perform processes in the following manner.

The document data obtaining portion 201 obtains, from the document server 1, the object data 5J corresponding to the edition of the document 4 indicated in the point of focus data 5P'. At this time, the time stamp of the edition and the document code of the document 4 are given to the document server 1.

The screen display processing portion 202 displays the document 4 corresponding to the edition indicated in the point of focus data 5P' based on the obtained object data 5J. At this time, the focus region 4R is so adjusted that the point of focus indicated in the point of focus data 5P' centers on the display 20e or on the touch-sensitive panel display 21e.

### [Other Embodiments]

In the foregoing embodiments, the example is described in which the object 4J is a rectangular object having a character string. Instead of this, however, the object 4J may be an object having the format of Joint Photographic Experts Group (JPEG) or of Graphics Interchange Format (GIF).

In the foregoing embodiments, the individual functions shown in Fig. 5 are implemented by executing programs by the CPU. Instead of this, however, all or a part of the functions may be implemented by a hardware or circuit such as Application Specific Integrated Circuit (ASIC) or Field Programmable Gate Array (FPGA).

It is to be understood that the configurations of the document sharing system 100, the document server 1, the terminal 2, the constituent elements thereof, the content and order of the processing, the configuration of the data, the structure of the document 4, and the like can be appropriately modified without departing from the spirit of the present invention.

## Claims

1. Document sharing system (100) comprising:
a document display support device (1);
a plurality of terminals (2a, 2b, 2c, 2d), each of which has a display device (20e); and
a communication line (3) connecting the display support device (1) and the plurality of terminals (2a, 2b, 2c, 2d);
wherein the document display support device (1) comprises:
a first processor (10a) configured to manage a shared document (4), respective partial regions of the shared document being displayed in three or more of the plurality of terminals (20) as respective display regions (4R);
a first communication interface (10e) configured to perform communication between each of the three or more terminals (20) and the document display support device (1) through the communication line (3), so as to receive information corresponding to a display region (4R) of the shared document (4) displayed in the display device (20e) of the respective terminal (20); and
a memory (10b) configured to store at least information received through the first communication interface (10e), said information corresponding to the display regions (4R) of the shared document (4) for each of the three or more terminals (20); wherein
the first processor (10a) is configured to identify based on the received information from two or more of the three or more terminals a common region (4K), the common region (4K) being common to, out of the three or more terminals (20), the display region (4R) of the shared document in each of two or more terminals (20) except one particular terminal (20), and
the first processor (1000a) is configured to inform said one particular terminal (20) of the common region (4K) or a predetermined point of the common region (4K) through the first communication interface (10e) and
wherein each of said terminals (20) comprises:
a second processor (20a); and
a second communication interface (20h); wherein
the second processor (20a) is configured to cause the display device (20e) to display at least a partial region of the shared document (4) in accordance with operation performed by a user,
the second processor (20a) is configured to inform the document display support device (1) of information corresponding to a display region (4R), of the shared document (4), displayed in the display device (20e) through the second communication interface (20h), and
the second processor (20a) is configured to update, when a point of focus is informed by the document display support device (1), a display on the display device (20e) in such a manner that a part corresponding to the point of focus appears.

2. The document sharing system (100) according to claim 1, wherein, when the first processor (1000a) is configured to inform said one particular terminal (20) of a predetermined point of the common region (4K), the first processor (10a) is configured to set as the predetermined point, a center of the common region (4K).

3. The document sharing system (100) according to claim 1, wherein
the shared document (4) includes at least one object (4 J), and
the first processor (10a) is configured to identify, an object (4J) of which a center is closest to a center of the common region (4K), and to set, as the predetermined point, the center of the object identified.

4. The document sharing system (100) according to any one of claims 1 to 3, wherein
the first processor (10a) is configured to identify, as the common region (4K), a region common to, out of the two or more terminals (20) except said one particular terminal (20), the display region (4R) in each of the two or more terminals (20) having a display resolution equal to or lower than a display resolution of said one particular terminal (20).

5. The document sharing system (100) according to any one of claims 1 to 3, wherein the first processor (10a) is configured to identify, as the common region (4K), a region common to, out of the two or more terminals (20) except said one particular terminal (20), the display region (4R) in each of the two or more terminals (20) having an amount of change in the display region (4R) per unit time equal to or lower than a predetermined amount.

6. The document sharing system (100) according to any one of claims 1 to 5, wherein
the first processor (10a) is configured to identify, as the common region (4K), a region common to, out of the two or more terminals (20) except said one particular terminal (20), the display region (4R) in each of the two or more terminals (20) displaying a document whose edition is different from an edition of a document displayed in said one particular terminal (20), and
the first processor (10a) is further configured to inform said one particular terminal (20) of information corresponding to the edition different from the edition of the document displayed in the particular terminal

7. The document sharing system (100) according to any one of claims 1 to 6, wherein, when the first processor (1000a) is configured to inform said one particular terminal (20) of a predetermined point of the common region (4K), the first processor (10a) is configured to inform said one particular terminal (20) of the predetermined point through the first communication interface (10e) in accordance with predetermined operation performed by a user in said one particular terminal (20).

8. The document sharing system (100) according to claim 1, wherein the second processor (20a) is configured to send, in accordance with predetermined operation performed by the user in the terminal (20), a request for information on the predetermined point to the document display support device (1) through the second communication interface (20h).

9. A document display method for displaying a shared document (4) using a document sharing system according to claim 1, comprising:
displaying, by each of the terminals (20), at least a partial region of the shared document (4) in accordance with operation performed by a user;
informing, by each of the terminals (20), the document display support device (1) of information corresponding to a display region (4R) of the shared document (4);
identifying, by the document display support device (1), a common region (4K), the common region (4K) being common to, out of the plurality of terminals (20), the display region (4R) in each of two or more terminals (20) except one particular terminal (20);
informing, by the document display support device (1), said one particular terminal (20) of the common region (4K) or a predetermined point of the common region (4K); and
updating, by said one particular terminal (20), display of the shared document (4) in such a manner that a part corresponding to the point of focus appears.

10. The method according to claim 9, wherein the document display support device (1) informs said one particular terminal (20) of the predetermined point through the first communication interface (10e) in accordance with predetermined operation performed by the user in said one particular terminal (20).

## Patentansprüche

1. Dokumentmitbenutzungssystem (100) mit:
einer Dokumentanzeigeunterstützungsvorrichtung (1);
einer Mehrzahl von Terminals (2a,2b,2c,2d), die jeweils eine Anzeigevorrichtung (20e) haben; und
einer Kommunikationsleitung (3), die die Anzeigeunterstützungsvorrichtung (1) und die Mehrzahl von Terminals (2a,2b,2c,2d) verbindet;
wobei die Dokumentanzeigeunterstützungsvorrichtung (1) umfasst:
einen ersten Prozessor (10a), der ausgestaltet ist, um ein mitbenutztes Dokument (4) zu managen, wobei jeweilige Teilbereiche des mitbenutzten Dokuments auf drei oder mehr der Mehrzahl von Terminals (20) als jeweilige Anzeigebereiche (4R) angezeigt werden;
eine erste Kommunikationsschnittstelle (10e), die ausgestaltet ist, um Kommunikation zwischen den drei oder mehr Terminals (20) und der Dokumentanzeigeunterstützungsvorrichtung (1) über die Kommunikationsleitung (3) durchzuführen, um so Information entsprechend einem Anzeigebereich (4R) des mitbenutzten Dokuments (4) zu erhalten, das auf die Anzeigevorrichtung (20e) des jeweiligen Terminals (20) angezeigt wird;
einen Speicher (10b), der ausgestaltet ist, um zumindest Information zu speichern, die über die erste Kommunikationsstelle (10e) empfangen wird, wobei die Information den Anzeigebereiche (4R) des mitbenutzten Dokuments (4) für jedes der drei oder mehr Terminals (20) entspricht; wobei
der erste Prozessor (10a) ausgestaltet ist, um beruhend auf der empfangenen Information von zwei oder mehr der drei oder mehr Terminals (20) einen gemeinsamen Bereich (4K) zu identifizieren, wobei der gemeinsame Bereich (4K) gemeinsam für den Anzeigebereich (4R) des mitbenutzten Dokuments für je zwei oder mehr Terminals aus den drei oder mehr Terminals (20) mit Ausnahme des betroffenen Terminals (20) ist, und
der erste Prozessor (1000a) ausgestaltet ist, um dieses bestimmte Terminal (20) bezüglich des gemeinsamen Bereichs (4K) oder eines vorgegebenen Punktes des gemeinsamen Bereichs (4K) über die erste Kommunikationsschnittstelle (10e) zu informieren, und
wobei jedes der Terminals (20) umfasst:
einen zweiten Prozessor (20a); und
eine zweite Kommunikationsschnittstelle (20h); wobei
der zweite Prozessor (20a) ausgestaltet ist, um die Anzeigevorrichtung (20e) zu veranlassen, zumindest einen Teilbereich des mitbenutzten Dokuments in Übereinstimmung mit dem Betrieb anzuzeigen, der durch einen Benutzer ausgeführt wird;
wobei der zweite Prozessor (20a) ausgestaltet ist, um die Dokumentanzeigeunterstützungsvorrichtung (1) bezüglich Information entsprechend einem Anzeigebereich (4R) des mitbenutzten Dokuments (4), das in der Anzeigevorrichtung (20e) angezeigt wird, über die zweite Kommunikationsschnittstelle (20h) zu informieren; und
wobei der zweite Prozessor (20a) ausgestaltet ist, um, wenn ein Punkt der Aufmerksamkeit durch die Dokumentanzeigeunterstützungsvorrichtung (1) informiert wird, eine Anzeige der Anzeigevorrichtung (20e) aufzufrischen, so dass ein Teil entsprechend dem Punkt der Aufmerksamkeit erscheint.

2. Dokumentmitbenutzungssystem (100) nach Anspruch 1, bei dem, wenn der erste Prozessor (1000a) ausgestaltet ist, um das eine besondere Terminal (20) bezüglich eines vorbestimmten Punktes des gemeinsamen Bereiches (4K) zu informieren, der erste Prozessor (10a) ausgestaltet ist, um als den vorgegebenen Punkt einen Mittelpunkt des gemeinsamen Bereichs (4K) einzustellen.

3. Dokumentmitbenutzungssystem (100) nach Anspruch 1, bei dem
das mitbenutzte Dokument (4) zumindest ein Objekt (4J) umfasst, und
wobei der erste Prozessor (10a) ausgestaltet ist, um ein Objekt (4J) zu identifizieren, von dem ein Mittelpunkt am nächsten zu dem Mittelpunkt des gemeinsamen Bereichs (4K) ist, und um als den vorgegebene Punkt den Mittelpunkt des identifizierten Objektes einzustellen.

4. Dokumentmitbenutzungssystem (100) nach einem der Ansprüche 1 bis 3, bei dem
der erste Prozessor (10a) ausgestaltet ist, um als gemeinsamen Bereich (4K) einen Bereich, der den zwei oder mehr Terminals (20) - mit Ausnahme des einen besonderen Terminals (20) - gemein ist, für den Anzeigebereich (4R) in jedem der zwei oder mehr Terminals (20), die eine Anzeigeauflösung gleich oder niedriger als eine Anzeigeauflösung des einen besonderen Terminals (20) haben, zu identifizieren.

5. Dokumentmitbenutzungssystem (100) nach einem der Ansprüche 1 bis 3, bei dem der erste Prozessor (10a) ausgestaltet ist, um als gemeinsamen Bereich (4K) einen Bereich, der den zwei oder mehr Terminals (20) - mit Ausnahme des einen besonderen Terminals (20) - gemein ist, zu identifizieren, welcher eine Änderungsmenge in dem Anzeigebereich (4R) pro Zeiteinheit gleich oder niedriger als einen vorgegebenen Betrag hat.

6. Dokumentmitbenutzungssystem (100) nach einem der Ansprüche 1 bis 5, bei dem
der erste Prozessor (10a) ausgestaltet ist, um als gemeinsamen Bereich (4K) einen Bereich, der den zwei oder mehr Terminals (20) - mit Ausnahme des einen besonderen Terminals (20) - gemein ist, zu identifizieren, wobei der Anzeigebereichs (4R) in jedem der zwei oder mehr Terminals (20), die ein Dokument anzeigen, dessen Editierung sich von einer Editierung eines Dokuments unterscheidet, das in dem einem besonderen Terminal (20) angezeigt wird; und
wobei der erste Prozessor (10a) des Weiteren ausgestaltet ist, um das eine besondere Terminal (20) mit Information entsprechend dem Editierungsunterschied von der Editierung des Dokuments, das in dem besonderen Terminal (20) angezeigt wird, zu informieren.

7. Dokumentmitbenutzungssystem (100) nach einem der Ansprüche 1 bis 6, bei dem, wenn der erste Prozessor (1000a) ausgestaltet ist, um das eine besondere Terminal (20) bezüglich eines vorgegebenen Punktes des gemeinsamen Bereichs (4K) zu informieren, der erste Prozessor (10a) ausgestaltet ist, um das eine besondere Terminal (20) bezüglich eines vorgegeben Punktes über die erste Kommunikationsschnittstelle (10e) in Übereinstimmung mit einem vorgegebenen Betrieb zu informieren, der durch einen Benutzer des einen besonderen Terminals (20) ausgeführt wird.

8. Dokumentmitbenutzungssystem (100) nach einem der Ansprüche 1, bei dem der zweite Prozessor (20e) ausgestaltet ist, um in Übereinstimmung mit einem vorgegeben Betrieb, der durch den Benutzer des Terminals (20) ausgeführt wird, eine Anfrage nach Information bezüglich des vorbestimmten Punktes an die Dokumentanzeigeunterstützungsvorrichtung (1) über die zweite Kommunikationsschnittstelle (20h) zu senden.

9. Dokumentanzeigeverfahren zur Anzeige eines mitbenutzten Dokuments (4) unter Verwendung eines Dokumentmitbenutzungssystem nach Anspruch 1, mit:
Anzeigen durch jedes der Terminals (20) zumindest eines Teilbereichs des mitbenutzten Dokuments (4) in Übereinstimmung mit einem Betrieb, der durch einen Benutzer ausgeführt wird;
Informieren der Dokumentanzeigeunterstützungsvorrichtung (1) durch jedes der Terminals (20) mit Information entsprechend einem Anzeigebereich (4R) des mitbenutzten Dokuments (4);
Identifizieren durch die Dokumentanzeigeunterstützungsvorrichtung (1) eines gemeinsamen Bereichs (4K), wobei der gemeinsame Bereich (4K) für den Anzeigebereich (4R) aus der Mehrzahl der Terminals (20) für jeweils zwei oder mehr Terminals (20) mit Ausnahme eines besonderen Terminals (20) gemein ist;
Informieren des einen besonderen Terminals (20) durch die Dokumentanzeigeunterstützungsvorrichtung (1) bezüglich des gemeinsamen Bereichs (4K) oder eines vorgegebenen Punktes des gemeinsamen Bereichs (4K); und
Auffrischen durch das eine besondere Terminal (20) der Anzeige des mitbenutzten Dokuments (4) auf eine solche Art, dass ein Teil entsprechend dem Punkt der Aufmerksamkeit erscheint.

10. Verfahren nach Anspruch 9, bei dem die Dokumentanzeigeunterstützungsvorrichtung (1) das eine besondere Terminal (20) bezüglich des vorgegebenen Punktes über die erste Kommunikationsschnittstelle (10e) in Übereinstimmung mit einem vorgegebenen Betrieb informiert, der durch den Benutzer des einen besonderen Terminals (20) ausgeführt wird.

## Revendications

1. Système de partage de documents (100) comprenant :
un dispositif de support d'affichage de documents (1) ;
une pluralité de terminaux (2a, 2b, 2c, 2d), chacun desquels a un dispositif d'affichage (20e) ; et
une ligne de communication (3) connectant le dispositif de support d'affichage (1) et la pluralité de terminaux (2a, 2b, 2c, 2d) ; dans lequel le dispositif de support d'affichage de documents (1) comprend :
un premier processeur (10a) configuré pour gérer un document partagé (4), des régions partielles respectives du document partagé étant affichées dans trois ou plus de la pluralité de terminaux (20) en tant que régions d'affichage respectives (4R) ;
une première interface de communication (10e) configurée pour effectuer une communication entre chacun des trois terminaux ou plus (20) et le dispositif de support d'affichage de documents (1) à travers la ligne de communication (3), de manière à recevoir des informations correspondant à une région d'affichage (4R) du document partagé (4) affiché dans le dispositif d'affichage (20e) du terminal respectif (20) ; et
une mémoire (10b) configurée pour stocker au moins des informations reçues à travers la première interface de communication (10e), lesdites informations correspondant aux régions d'affichage (4R) du document partagé (4) pour chacun des trois terminaux ou plus (20) ; dans lequel
le premier processeur (10a) est configuré pour identifier, sur la base des informations reçues à partir deux ou plus des trois terminaux ou plus, une région commune (4K), la région commune (4K) étant commune à, parmi les trois terminaux ou plus, la région d'affichage (4R) du document partagé dans chacun des deux terminaux ou plus (20) à l'exception d'un terminal particulier (20), et
le premier processeur (1000a) est configuré pour signaler audit un terminal particulier (20) la région commune (4K) ou un point prédéterminé de la région commune (4K) à travers la première interface de communication (10e), et
dans lequel chacun desdits terminaux (20) comprend :
un deuxième processeur (20a) ; et
une deuxième interface de communication (20h) ; dans lequel le deuxième processeur (20a) est configuré pour amener le dispositif d'affichage (20e) pour afficher au moins une région partielle du document partagé (4) en fonction d'une opération effectuée par un utilisateur,
le deuxième processeur (20a) est configuré pour signaler au dispositif de support d'affichage de documents (1) des informations correspondant à une région d'affichage (4R) du document partagé (4) affichée dans le dispositif d'affichage (20e) à travers la deuxième interface de communication (20h), et
le deuxième processeur (20a) est configuré pour mettre à jour, quand un point de focalisation est signalé par le dispositif de support d'affichage de documents (1), un affichage sur le dispositif d'affichage (20e) de telle manière qu'une partie correspondant au point de focalisation apparaisse.

2. Système de partage de documents (100) selon la revendication 1, dans lequel, quand le premier processeur (1000a) est configuré pour signaler audit un terminal particulier (20) un point prédéterminé de la région commune (4K), le premier processeur (10a) est configuré pour fixer en tant que point prédéterminé un centre de la région commune (4K).

3. Système de partage de documents (100) selon la revendication 1, dans lequel
le document partagé (4) inclut au moins un objet (4J), et
le premier processeur (10a) est configuré pour identifier un objet (4J) dont un centre est le plus proche d'un centre de la région commune (4K) et pour fixer, en tant que point prédéterminé, le centre de l'objet identifié.

4. Système de partage de documents (100) selon l'une quelconque des revendications 1 à 3, dans lequel
le premier processeur (10a) est configuré pour identifier, en tant que région commune (4K), une région commune à, parmi les deux terminaux ou plus (20) à l'exception dudit un terminal particulier (20), la région d'affichage (4R) dans chacun des deux terminaux ou plus (20) ayant une résolution d'affichage égale ou inférieure à une résolution d'affichage dudit un terminal particulier (20).

5. Système de partage de documents (100) selon l'une quelconque des revendications 1 à 3, dans lequel le premier processeur (10a) est configuré pour identifier, en tant que région commune (4K), une région commune à, parmi les deux terminaux ou plus (20) à l'exception dudit un terminal particulier (20), la région d'affichage (4R) dans chacun des deux terminaux ou plus (20) ayant une quantité de changement dans la région d'affichage (4R) par temps unitaire égale ou inférieure à une quantité prédéterminée.

6. Système de partage de documents (100) selon l'une quelconque des revendications 1 à 5, dans lequel
le premier processeur (10a) est configuré pour identifier, en tant que région commune (4K), une région commune à, parmi les deux terminaux ou plus (20) à l'exception dudit un terminal particulier (20), la région d'affichage (4R) dans chacun des deux terminaux ou plus (20) affichant un document dont l'édition est différente d'une édition d'un document affiché dans ledit un terminal particulier (20), et
le premier processeur (10a) est configuré en outre pour signaler audit un terminal particulier (20) des informations correspondant à l'édition différente de l'édition du document affiché dans le terminal particulier.

7. Système de partage de documents (100) selon l'une quelconque des revendications 1 à 6, dans lequel, quand le premier processeur (1000a) est configuré pour signaler audit un terminal particulier (20) un point prédéterminé de la région commune (4K), le premier processeur (10a) est configuré pour signaler audit un terminal particulier (20) le point prédéterminé à travers la première interface de communication (10e) en fonction d'une opération prédéterminée effectuée par un utilisateur dans ledit un terminal particulier (20).

8. Système de partage de documents (100) selon la revendication 1, dans lequel le deuxième processeur (20a) est configuré pour envoyer, en fonction d'une opération prédéterminée effectuée par l'utilisateur dans le terminal (20), une demande d'informations sur le point prédéterminé au dispositif de support d'affichage de documents (1) à travers la deuxième interface de communication (20h).

9. Procédé d'affichage de documents pour afficher un document partagé (4) en utilisant un système de partage de documents selon la revendication 1, comprenant :
l'affichage, par chacun des terminaux (20), d'au moins une région partielle du document partagé (4) en fonction d'une opération effectuée par un utilisateur;
le fait de signaler, par chacun des terminaux (20), au dispositif de support d'affichage de documents (1) des informations correspondant à une région d'affichage (4R) du document partagé (4) ;
l'identification, par le dispositif de support d'affichage de documents (1), d'une région commune (4K), la région commune (4K) étant commune à, parmi la pluralité de terminaux (20), la région d'affichage (4R) dans chacun des deux terminaux ou plus (20) à l'exception d'un terminal particulier (20) ;
le fait de signaler, par le dispositif de support d'affichage de documents (1), audit un terminal particulier (20) la région commune (4K) ou un point prédéterminé de la région commune (4K) ; et
la mise à jour, par ledit un terminal particulier (20), de l'affichage du document partagé (4) de telle manière qu'une partie correspondant au point de focalisation apparaisse.

10. Procédé selon la revendication 9, dans lequel le dispositif de support d'affichage de documents (1) signale audit un terminal particulier (20) le point prédéterminé à travers la première interface de communication (10e) en fonction d'une opération prédéterminée effectuée par l'utilisateur dans ledit un terminal particulier (20).
